# EUROPÄISCHE PATENTSCHRIFT

(11) **EP 3 105 803 B1**
(45) Veröffentlichungstag und Bekanntmachung des Hinweises auf die Patenterteilung: **15.01.2020**
(21) Anmeldenummer: 15705573.2
(22) Anmeldetag: 13.02.2015
(51) Int. Cl.: H01M 4/04, H01M 4/133, H01M 4/1393, H01M 4/36, H01M 4/587, H01M 4/62, H01M 10/0525, H01M 10/0569, C01B 32/22, H01M 4/02

(54) **STABILISIERTE (TEIL)LITHIIERTE GRAPHITMATERIALIEN, VERFAHREN ZU DEREN HERSTELLUNG UND VERWENDUNG FÜR LITHIUMBATTERIEN**
STABILIZED (PARTLY) LITHIATED GRAPHITE MATERIALS, PROCESS FOR PREPARING THEM AND USE FOR LITHIUM BATTERIES
MATÉRIAUX DE GRAPHITE (PARTIELLEMENT) LITHIÉS STABILISÉS, LEUR PROCÉDÉ DE PRODUCTION ET LEUR UTILISATION POUR DES BATTERIES AU LITHIUM

(30) Priorität: 13.02.2014 DE 102014202657
(43) Veröffentlichungstag der Anmeldung: 21.12.2016
(73) Patentinhaber: Albemarle Germany GmbH, 65926 Frankfurt am Main (DE)
(72) Erfinder: WIETELMANN, Ulrich, 61381 Friedrichsdorf (DE); NICKEL, Vera, 35708 Haiger (DE); SCHERER, Stefan, 64347 Griesheim (DE); EMMEL, Ute, 65929 Frankfurt am Main (DE); BUHRMESTER, Thorsten, 64287 Darmstadt (DE); HABER, Steffen, 65812 Bad Soden (DE); KRÄMER, Gerd, 61118 Bad Vilbel (DE)
(74) Vertreter: Rottmayer, Hans
(86) Internationale Anmeldenummer: PCT/EP2015/053040
(87) Internationale Veröffentlichungsnummer: WO 2015/121392

(56) Entgegenhaltungen:
- DE-T5-112004 001 344
- JP-B2- 2 960 834
- KOMABA S ET AL: "Alkali carbonate-coated graphite electrode for lithium-ion batteries", CARBON, ELSEVIER, OXFORD, GB, Bd. 46, Nr. 9, 22. April 2008 (2008-04-22) , Seiten 1184-1193, XP022795415, ISSN: 0008-6223, DOI: 10.1016/J.CARBON.2008.04.021 [gefunden am 2008-04-22]

## Beschreibung

Elektrochemische Zellen für Lithiumionenbatterien werden standardmäßig im entladenen Zustand gebaut. Dies hat zum Vorteil, dass beide Elektroden in luft- und wasserstabiler Form vorliegen. Das elektrochemisch aktive Lithium wird dabei ausschließlich in Form des Kathodenmaterials eingebracht. Das Kathodenmaterial enthält Lithiummetalloxide wie beispielsweise Lithiumkobaltoxid (LiCoO₂) als elektrochemisch aktive Komponente. Das Anodenmaterial in den derzeitig kommerziellen Batterien enthält im entladenen Zustand als aktive Masse ein graphitisches Material mit einer theoretischen elektrochemischen Kapazität von 372 Ah/kg. Es ist in der Regel vollständig lithiumfrei. In zukünftigen Bauarten können auch (ebenfalls lithiumfreie) Materialien mit höherer spezifischer Kapazität, beispielsweise Legierungsanoden, häufig Silicium- oder Zinn-basiert, zum Einsatz kommen.

In realen Batteriesystemen geht ein Teil dieses Lithiums durch irreversible Prozesse vor allem während des ersten Lade- Entladevorganges verloren. Außerdem hat das klassische LithiumIonen-Batterie-Design mit lithiumfreiem Graphit als Anode den Nachteil, dass lithiumfreie potentielle Kathodenmaterialien (z.B. MnO₂) nicht verwendbar sind.

Im Falle von Graphit geht man davon aus, dass vor allem sauerstoffhaltige Oberflächengruppen beim ersten Batterieladungsvorgang irreversibel mit Lithium zu stabilen Salzen reagieren. Dieser Teil des Lithiums ist für die nachfolgenden elektrochemischen Lade-/ Entladevorgänge verloren, da die gebildeten Salze elektrochemisch inaktiv sind. Ähnlich ist es im Falle von Legierungsanoden, beispielsweise Silicium- oder Zinnanodenmaterialien. Oxidische Verunreinigungen konsumieren Lithium gemäß:

MO₂ + 4 Li → M + 2 Li₂O (1)

(M = Sn, Si u. a.)

Das in Form von Li₂O gebundene Lithium ist elektrochemisch nicht mehr aktiv. Beim Einsatz von Anodenmaterialien mit einem Potential < ca. 1,5 V wird ein weiterer Teil des Lithiums irreversibel für die Ausbildung einer Passivierungsschicht (sogenanntes *solid electrolyte interface*, SEI) auf der negativen Elektrode verbraucht. Im Falle von Graphit gehen auf diese Art und Weise zwischen insgesamt etwa 7 und 20 Gew.-% des mit der positiven Masse (also dem Kathodenmaterial) eingebrachten Lithiums verloren. Im Falle von Zinn- oder Siliciumanoden liegen diese Verluste in der Regel noch höher. Das gemäß folgender Gleichung (2) entlithiierte, "übrigbleibende" Übergangsmetalloxid (beispielweise CoO₂) kann mangels aktiven Lithiums keinen Beitrag zur reversiblen elektrochemischen Kapazität der galvanischen Zelle leisten:

2n LiCoO₂ + MOₙ → n Li₂O + M + 2n CoO₂ (2)

(M = Si, Sn etc.; n = 1 oder 2)

Es gibt viele Untersuchungen mit dem Ziel, diese irreversiblen Verluste des ersten Lade-/ Entladezyklus zu minimieren oder ganz auszugleichen. Die Beschränkung kann überwunden werden, indem zusätzliches Lithium in metallischer Form, beispielsweise als stabilisiertes Metallpulver ("SLMP") in die Batteriezelle eingebracht wird (z.B. US2008283155A1; B. Meyer, F. Cassel, M. Yakovleva, Y. Gao, G. Au, Proc. Power Sourc. Conf. 2008, 43rd, 105-108). Dies hat aber zum Nachteil, dass die üblichen Verfahren zur Herstellung von Batterieelektroden für Lithiumionenbatterien nicht durchgeführt werden können. So reagiert nach dem Stand der Technik passiviertes Lithium mit den Lufthauptbestandteilen Sauerstoff und Stickstoff. Die Kinetik dieser Reaktion ist zwar im Vergleich mit nicht-stabilisiertem Lithium sehr stark verlangsamt, jedoch ist bei längerer Exposition an Luft, auch unter Trockenraumbedingungen, eine Veränderung der Oberflächen und eine Abnahme des Metallgehaltes nicht zu vermeiden. Als noch gravierenderer Nachteil ist die äußerst heftige Reaktion von Li-Metallpulver mit dem häufig für die Elektrodenbereitung verwendeten Lösungsmittel N-Methylpyrrolidon (NMP) zu bewerten. Zwar konnten durch die Bereitstellung stabilisierter oder gecoateter Lithiumpulver bedeutsame Fortschritte in Richtung sicherer Handhabung getan werden, jedoch ist die Stabilität der nach dem Stand der Technik stabilisierten Lithiumpulver häufig nicht ausreichend, um unter Praxisbedingungen eine gefahrlose Verwendung von passiviertem Lithiumpulver im Falle NMP-basierter Elektrodenherstellverfahren (Suspensionsverfahren) zu garantieren. Während ungecoatete oder mangelhaft gecoatete Metallpulver schon bei Raumtemperatur mit NMP bereits nach einer kurzen Induktionszeit heftig (thermisches run away) reagieren können, findet dieser Prozeß im Falle gecoateter Lithiumpulver erst bei erhöhten Temperaturen (beispielsweise 30 oder 80°C) statt. So wird in US2008/0283155 beschrieben, dass das mit Phosphorsäure gecoatete Lithiumpulver aus Beispiel 1 unmittelbar nach Zusammenmischen bei 30°C äußerst heftig (run away) reagiert, während ein zusätzlich mit einem Wachs gecoatetes Pulver bei 30°C in NMP mindestens 24 h stabil ist. Die nach WO2012/052265 gecoateten Lithiumpulver sind bis etwa 80°C in NMP kinetisch stabil, sie zersetzen sich aber bei darüber hinausgehenden Temperaturen exotherm, zumeist unter run away-artigen Erscheinungen. Aus hauptsächlich diesem Grunde konnte sich die Verwendung von Lithiumpulvern als Lithiumreservoir für Lithiumionenbatterien bzw. für die Prälithiierung von Elektrodenmaterialien bisher nicht kommerziell durchsetzen.

Alternativ kann zusätzliches elektrochemisch aktives Lithium auch durch den Zusatz von Graphit-Lithium-Interkalationsverbindungen (LiCₓ) zur Anode in eine elektrochemische Lithiumzelle eingebracht werden. Solche Li-Interkalationsverbindungen können entweder elektrochemisch oder chemisch hergestellt werden.

Die elektrochemische Herstellung vollzieht sich automatisch beim Laden konventioneller Lithiumionenbatterien. Durch diesen Prozeß können Materialien mit Lithium : Kohlenstoff-Stöchiometrien von maximal 1 : 6,0 gewonnen werden (siehe z.B. N. Imanishi, "Development of the Carbon Anode in Lithium Ion Batteries", in: M. Wakihara und O. Yamamoto (ed). in: Lithium Ion Batteries, Wiley-VCH, Weinheim 1998). Das solcherart hergestellte teilweise oder vollständig lithiierte Material kann prinzipiell einer geladenen Lithiumionenzelle unter Schutzgasatmosphäre (Argon) entnommen und nach entsprechender Konditionierung (mit geeigneten Lösemitteln waschen und trocknen) für neue Batteriezellen verwendet werden. Wegen des hohen damit verbundenen Aufwandes wird dieses Vorgehen nur für analytische Untersuchungszwecke gewählt. Das Verfahren besitzt aus wirtschaftlichen Gründen keine praktische Relevanz.

Weiterhin gibt es chemisch-präparative Wege zur Lithiierung von Graphitmaterialien. Es ist bekannt, dass Lithiumdampf ab einer Temperatur von 400°C mit Graphit zu Lithiumeinlagerungsverbindungen (Lithiuminterkalaten) reagiert. Beim Überschreiten von 450°C bildet sich jedoch unerwünschtes Lithiumcarbid Li₂C₂. Die Einlagerungsreaktion funktioniert gut mit hochorientiertem Graphit (HOPG = Highly Oriented Pyrolytic Graphite). Bei Verwendung von flüssigem Lithium reicht schon eine Temperatur von 350°C aus (R. Yazami, J. Power Sources 43-44 (1993) 39-46). Die Verwendung hoher Temperaturen ist generell aus energetischen Gründen ungünstig. Im Falle der Verwendung von Lithium kommt die hohe Reaktivität und Korrosivität des Alkalimetalls dazu. Deshalb hat diese Herstellvariante ebenfalls keine kommerzielle Bedeutung.

Bei Verwendung extrem hoher Drücke (2 GPa, entspr. 20.000 atm) kann die Lithiuminterkalation schon bei Raumtemperatur erreicht werden (D. Guerard, A. Herold, C. R. Acad. Sci. Ser. C., 275 (1972) 571). Solche hohen Drücke lassen sich nur in ganz speziellen hydraulischen Pressen erreichen, die nur für die Herstellung kleinster Labormengen geeignet sind. Es handelt sich also um kein technisch-industriell geeignetes Verfahren zur Herstellung kommerzieller Mengen an Lithium-Graphit-Interkalationsverbindungen.

Schließlich wurde die Herstellung von lithiiertem Naturgraphit (Ceylongraphit) mittels Hochenergievermahlung in einer Kugelmühle beschrieben. Dazu wurde der überwiegend hexagonal strukturierte Naturgraphit aus dem heutigen Sri Lanka mit Lithiumpulver (170 µm mittlere Partikelgröße) in den Li : C - Verhältnissen 1:6; 1:4 und 1:2 umgesetzt. Nur mit dem Molverhältnis 1:2 konnte eine vollständige Lithiierung zum finalen Molverhältnis LiC₆ erreicht werden (R. Janot, D. Guerard, Progr. Mat. Sci. 50 (2005) 1-92). Auch diese Synthesevariante ist technisch-kommerziell nachteilig. Zum einen wird ein sehr hoher Lithiumüberschuß benötigt, um eine ausreichende oder vollständige Lithiierung zu erreichen. Der überwiegende Anteil des Lithiums geht verloren (in der Mühle und auf den Mahlkugeln) bzw. er wird nicht interkaliert (liegt also nach wie vor in elementarer Form vor). Zum anderen werden für die Herstellung von Anoden für Lithiumionenbatterien in der Regel keine unkonditionierten Naturgraphite verwendet. Die mechanische Integrität von Naturgraphiten wird nämlich infolge von sogn. Exfoliierung durch die Interkalation von solvatisierten Lithiumionen beim Batteriezyklen irreversibel zerstört, s. P. Kurzweil, K. Brandt, "Secondary Batteries - Lithium Rechargeable Systems" in Encyclopedia of Electrochemical Power Sources, J. Garche (ed.), Elsevier Amsterdam 2009, Vol. 5, S. 1-26). Deshalb werden stabilere synthetische Graphite verwendet. Solche synthetischen Graphite sind weniger kristallin und weisen einen geringeren Graphitierungsgrad auf. Schließlich sind die für Naturgraphit benötigten langen Vermahlungszeiten von bevorzugt 12 Stunden (Seite 29) nachteilig. Deshalb wurde das beschriebene Verfahren nicht kommerzialisiert.

In der oben aufgeführten Publikation von Janot und Guerard werden auch die Anwendungseigenschaften des lithiierten Ceylon-Graphits beschrieben (Kap. 7). Die Elektrodenfertigung erfolgt durch einfaches Aufpressen des Graphits auf ein Kupfernetz. Als Gegen- und Referenzelektrode werden Lithiumbänder, als Elektrolyt eine 1 M LiClO₄-Lösung in EC/DMC verwendet. Die Art der Elektrodenbereitung durch einfaches Aufpressen entspricht nicht dem Stand der Technik, wie sie bei der kommerziellen Batterieelektrodenherstellung angewendet wird. Einfaches Verpressen ohne Binder und ggfls Zugabe von Leitfähigkeitsadditiven führt zu keinen stabilen Elektroden, da die beim Laden-/Entladen stattfindenden Volumenänderungen unweigerlich zum Zerbröseln der Elektroden führen müssen, wodurch die Funktionsfähigkeit der Batteriezelle zerstört wird.

Ein weiteres Verfahren wird in KOMABA S ET AL: "Alkali carbonate-coated graphite electrode for lithium-ion batteries",CARBON, ELSEVIER, OXFORD, GB, Bd. 46, Nr. 9, 22. April 2008 (2008-04-22), Seiten 1184-1193, offenbart.

Ein weiterer Nachteil bei der Verwendung von Graphit-Lithium-Interkalaten besteht darin, dass diese sich gegenüber funktionalisierten Lösungsmitteln, beispielsweise Ethylencarbonat (EC), reaktiv verhalten, d.h. exotherm reagieren können. So zeigt die Mischung aus Li_{0,99}C₆ und EC beim Überschreiten von 150°C ein deutliches Exotherm. Ähnliche Mischungen mit Diethylcarbonat, Dimethylcarbonat und Ethylmethylcarbonat reagieren bereits ab etwa 110°C mit Lithium-Graphit-Interkalationsverbindungen (T. Nakajima, J. Power Sources 243 (2013) 581).

Der Erfindung liegt die Aufgabe zugrunde, ein teilweise oder vollständig unter Bildung von Lithiuminterkalaten lithiiertes für die Verwendung in Lithiumbatterieanoden geeignetes graphitbasiertes Material aufzuzeigen, das
- gut und vor allem gefahrlos auch an normaler Luft handhabbar ist,
- die üblichen Fertigungsmethoden, d.h. insbesondere eine Anodenfertigung unter Verwendung von lösemittelbasierten Dispersionsgieß- bzw. -beschichtungsverfahren ermöglicht und das
- insbesondere die gefahrlose Verwendung hochreaktiver Lösungsmittel, z.B. von N-Methylpyrrolidon (NMP)
ermöglicht.

Die Aufgabe wird gemäß der Ansprüche dadurch gelöst, dass pulverförmiger Graphit mit einem nichtelektrochemischen Verfahren teilweise oder vollständig bis zu einer Grenzstöchiometrie von LiC₆ lithiiert wird (nachfolgend wird dieser Prozeßschritt als "(Teil)lithiierung" bezeichnet) und in einem Folgeschritt durch Aufbringen einer stabilisierenden Beschichtung (eines Coatings) modifiziert wird. Dieser stabilisierte lithiumhaltige Graphit ist überraschenderweise gegenüber Luft und funktionalisierten Lösungsmitteln im Vergleich zu nicht stabilisiertem Graphit wesentlich weniger reaktiv und deshalb verbessert handhabbar und er kann dennoch als hochkapazitives Anodenmaterial und/oder Quelle für aktives Lithium in Lithiumbatterien verwendet werden.

Die erfindungsgemäßen stabilisierten (teil)lithiierten Graphitpulver werden durch ein nicht-elektrochemisches Verfahren hergestellt. In einem ersten Prozeßschritt wird ein pulverförmiger Graphit mit Lithiummetallpulver vermischt und durch Rühren, Vermahlen und/oder Verpressen zur Bildung von Li-Graphit-Interkalaten der Zusammensetzung LiCₓ (mit x = 6 - 600) zur Reaktion gebracht wird. Je nach gewünschter Endstöchiometrie werden die beiden genannten Rohstoffe im Molverhältnis Li : C von 1 : minimal 3 bis 1 : maximal 600 eingesetzt, bevorzugt 1 : minimal 5 und 1 : maximal 600. Das über die Grenzstöchiometrie LiC₆ eingebrachte Lithium liegt vermutlich in elementarer, fein verteilter Form an der Graphitoberfläche vor.

Die Umsetzung erfolgt im Temperaturbereich zwischen 0 und 180°C, bevorzugt 20 bis 150°C entweder im Vakuum oder unter einer Atmosphäre, deren Bestandteile nicht oder nur akzeptabel langsam mit metallischem Lithium und/oder Lithium-Graphit-Interkalationsverbindungen reagieren. Dies ist bevorzugt entweder trockene Luft oder ein Edelgas, besonders bevorzugt Argon.

Das Lithium wird in Pulverform, bestehend aus Partikeln mit einer durchschnittlichen Partikelgröße zwischen etwa 5 und 500 µm, bevorzugt 10 und 200 µm, eingesetzt. Es können sowohl gecoatete Pulver wie z.B. ein von Firma FMC angebotenes stabilisiertes Metallpulver (Lectromax powder 100, SLMP) mit einem Lithiumgehalt von mindestens 97 Gew.-% oder beispielsweise ein mit legierungsbildenden Elementen beschichtetes Pulver mit Metallgehalten von mindestens 95 Gew.-% (WO2013/104787A1) eingesetzt werden. Besonders bevorzugt werden ungecoatete Lithiumpulver mit einem Metallgehalt von ≥ 99 Gew.-% verwendet. Für einen Einsatz im Batteriebereich muß die Reinheit in Bezug auf metallische Verunreinigungen sehr hoch sein. Unter anderem darf der Natriumgehalt nicht > 200 ppm liegen. Bevorzugt liegt der Na-Gehalt ≤ 100 ppm, besonders bevorzugt ≤ 80 ppm.

Als Graphit können alle pulverförmigen Graphitqualitäten, sowohl solche aus natürlichen Vorkommen (sogenannter "Naturgraphit") als auch synthetisch/industriell hergestellte Sorten ("Synthesegraphite") verwendet werden. Es sind sowohl makrokristalline Flockengraphite als auch amorphe oder mikrokristalline Graphite einsetzbar.

Die Umsetzung (also die (Teil)lithiierung) erfolgt während einer Vermischung, Verpressung und/oder Vermahlung der beiden Komponenten Lithiumpulver und Graphitpulver. Im Labormaßstab kann die Vermahlung mittels Mörser und Pistill erfolgen. Bevorzugt erfolgt die Umsetzung aber in einer mechanischen Mühle, beispielsweise einer Stab-, Schwing- oder Kugelmühle. Besonders vorteilhaft wird die Umsetzung in einer Planetenkugelmühle vorgenommen. Im Labormaßstab kann dafür z.B. die Planetenkugelmühle Pulverisette 7 premium line von Firma Fritsch eingesetzt werden. Bei Verwendung von Planetenkugelmühlen lassen sich überraschenderweise sehr vorteilhaft kurze Reaktionszeiten von < 10 h, häufig sogar < 1 h realisieren.

Die Mischung aus Lithium- und Graphitpulver wird bevorzugt im trockenen Zustand vermahlen. Es kann jedoch auch ein gegenüber beiden Stoffen inertes Fluid bis zu einem Gewichtsverhältnis von maximal 1:1 (Summe Li+C : Fluid) zugegeben werden. Bei dem inerten Fluid handelt es sich bevorzugt um ein wasserfreies Kohlenwasserstofflösemittel, z.B. ein flüssiges Alkan oder Alkangemisch oder ein aromatisches Lösemittel. Durch die Zugabe von Lösemitteln wird die Heftigkeit des Mahlvorganges gedämpft und die Graphitpartikel werden weniger stark vermahlen.

Die Vermahlungsdauer richtet sich nach verschiedenen Anforderungen und Prozeßparametern:
- Gewichtsverhältnis Mahlkugeln zu Produktmischung
- Art der Mahlkugeln (z.B. Härte und Dichte)
- Intensität der Vermahlung (Umdrehungsfrequenz des Mahltellers)
- Reaktivität des Lithiumpulvers (z.B. Art des Coatings)
- Gewichtsverhältnis Li : C
- Produktspezifische Materialeigenschaften
- gewünschte Partikelgröße etc.

Die geeigneten Bedingungen können vom Fachmann durch einfache Optimierungsexperimente herausgefunden werden. Im allgemeinen schwanken die Vermahlungsdauern zwischen 5 Minuten und 24 Stunden, bevorzugt 10 Minuten und 10 Stunden.

Das (teil)lithiierte Graphitpulver ist gegenüber Umweltbedingungen (Luft und Wasser) sowie vielen funktionalisierten Lösemitteln (z.B. NMP) und Flüssigelektrolytlösungen "aktiv", d.h. es reagiert bzw. zersetzt sich bei längeren Expositionszeiten. Bei Auslagerung in normaler Luft reagiert das enthaltene Lithium zu thermodynamisch stabilen Salzen wie Lithiumhydroxid, Lithiumoxid und/oder Lithiumcarbonat. Um diesen Nachteil zumindest weitgehend zu vermeiden, werden die (teil)lithiierten Graphitpulver durch einen zweiten Prozeßschritt, ein Coatingverfahren, stabilisiert. Dazu wird das (teil)lithiierte Graphitpulver mit einem gasförmigen oder flüssigen Coatingmittel in geeigneter Weise umgesetzt ("passiviert"). Geeignete Coatingmittel enthalten gegenüber metallischem Lithium sowie Lithiumgraphitinterkalationsverbindungen reaktive funktionelle Gruppen oder Molekülbestandteile und sie reagieren deshalb mit dem oberflächenverfügbaren Lithium. Es findet eine Umsetzung der lithiumhaltigen Oberflächenzone unter Bildung von nicht oder wenig luftreaktiven (also thermodynamisch stabilen) Lithiumsalzen (wie z.B. Lithiumcarbonat, Lithiumfluorid, Lithiumhydroxid, Lithiumalkoholaten, Lithiumcarboxylaten etc) statt. Bei diesem Coatingvorgang bleibt der größte Teil des sich nicht an der Partikeloberfläche befindlichen Lithiums (z.B. des interkalierten Anteils) in aktiver Form, d.h. mit einem elektrochemischen Potential von ≤ ca. 1 V *vs.* Li/Li⁺ erhalten. Solche Coatingmittel sind aus der Lithiumionenbatterie-Technologie als *in-situ*-Filmbildner (auch als SEI-Bildner bezeichnet) für die negativen Elektrode bekannt und beispielsweise in folgendem Übersichtsartikel beschrieben: A. Lex-Balducci, W. Henderson, S. Passerini, Electrolytes for Lithium Ion Batteries, in: Lithium-Ion Batteries, Advanced Materials and Technologies, X. Yuan, H. Liu und J. Zhang (Hrsg.), CRC Press Boca Raton, 2012, p 147-196. Im Folgenden werden geeignete Coatingmittel beispielhaft aufgeführt. Als Gase eignen sich N₂, CO₂, CO, O₂, N₂O, NO, NO₂, HF, F₂, PF₃, PF₅, POF₃ u.ä. Geeignete flüssige Coatingmittel sind beispielsweise: Kohlensäureester (z.B. Vinylencarbonat (VC), Vinylethylencarbonat (VEC), Ethylencarbonat (EC), Propylencarbonat (PC), Dimethylcarbonat (DMC), Diethylcarbonat (DEC), Ethylmethylcarbonat (EMC), Fluoroethylencarbonat (FEC)); Lithiumchelatoboratlösungen (z.B. Lithium bis(oxalato)borat (LiBOB); Lithium bis(salicylato)borat (LiBSB); Lithium bis(malonato)borat (LiBMB); Lithium difluorooxalatoborat (LiDFOB), als Lösungen in organischen Lösungsmitteln, bevorzugt ausgewählt aus: sauerstoffhaltigen Heterocyclen wie THF, 2-Methyl-THF, Dioxolan, Kohlensäureestern (Carbonate) wie Ethylencarbonat, Propylencarbonat, Dimethylcarbonat, Diethylcarbonat und/oder Ethylmethylcarbonat, Nitrilen wie Acetonitril, Glutarodinitril, Carbonsäureestern wie Ethylacetat, Butylformiat und Ketonen wie Aceton, Butanon); schwefelorganische Verbindungen (z.B. Sulfite (Vinylethylensulfit, Ethylensulfit), Sulfone, Sultone u.ä.); N-haltige organische Verbindungen (z.B. Pyrrol, Pyridin, Vinylpyridin, Picoline, 1-Vinyl-2-pyrrolidinon), Phosphorsäure, organische phosphorhaltige Verbindungen (z.B. Vinylphosphonsäure), fluorhaltige organische und anorganische Verbindungen (z.B. teilfluorierte Kohlenwasserstoffe, BF₃, LiPF₆, LiBF₄, die beiden letzten Verbindungen gelöst in aprotischen Lösungsmitteln), siliciumhaltige Verbindungen (z.B. Silikonöle, Alkylsiloxane) u.a.

Beim Einsatz von flüssigen Coatingmitteln erfolgt der Coatingprozeß im allgemeinen unter Inertgasatmosphäre (z.B. Argonschutzatmosphäre) bei Temperaturen zwischen 0 und 150°C. Um den Kontakt zwischen dem Coatingmittel und dem (teil)lithiierten Graphitpulver zu erhöhen, sind Misch- oder Rührbedingungen vorteilhaft. Die notwendige Kontaktzeit zwischen Coatingmittel und (teil)lithiiertem Graphitpulver richtet sich nach der Reaktivität des Coatingmittels, der herrschenden Temperatur und anderer Prozeßparameter. Im allgemeinen sind Zeiten zwischen 1 Minute und 24 Stunden sinnvoll. Die gasförmigen Coatingmittel werden entweder in reiner Form oder bevorzugt in Abmischung mit einem Trägergas, z.B. einem Edelgas wie Argon, eingesetzt.

Das Coating verbessert nicht nur die Handhabungseigenschaften und die Sicherheit bei der Elektroden- (im allgemeinen Anoden-) Herstellung, sondern auch die Anwendungseigenschaften in der elektrochemischen Batteriezelle. Beim Einsatz vorgecoateter Anodenmaterialien entfällt nämlich die *in situ*-Bildung einer SEI (solid electrolyte interface) beim Kontakt des (teil)lithiierten Graphitanodenmaterials mit dem Flüssigelektrolyten der Batteriezelle. Die durch Vorcoating bewirkte Anodenfilmung außerhalb der elektrochemischen Zelle entspricht in ihren Eigenschaften einer sogenannten artifiziellen SEI. Im Idealfall entfällt der ansonsten notwendige Formierprozeß der elektrochemischen Zelle oder er wird zumindest vereinfacht.

Das nach dem oben beschriebenen Verfahren (teil)lithiierte und stabilisierte Graphitpulver kann zur Herstellung von Batterieelektroden verwendet werden. Dazu wird es unter Inert- oder Trockenraumbedingungen mit mindestens einem Bindermaterial und optional einem oder mehreren weiteren pulverförmigen lithiumeinlagerungsfähigen Material(ien) mit einem elektrochemischen Potential ≤ 2 V *vs* Li/Li⁺ sowie ebenfalls optional mit einem leitfähigkeitsverbessernden Additiv (z.B. Ruße oder Metallpulver) sowie einem organischen nichtwäßrigen Lösungsmittel gemischt und homogenisiert und diese Dispersion wird durch ein Beschichtungsverfahren (Gießverfahren, Spincoating oder air-brush-Verfahren) auf einen Stromableiter aufgebracht und getrocknet. Die nach erfindungsgemäßem Verfahren hergestellten stabilisierten (teil)lithiierten Graphitpulver sind überraschend gegenüber N-Methylpyrrolidon (NMP) und anderen funktionalisierten organischen Lösungsmitteln wenig reaktiv. Sie können deshalb ohne Probleme mit dem Lösemittel NMP und dem Bindermaterial PVdF (Polyvinylidendifluorid) zu einer vergieß- oder sprühbaren Dispersion verarbeitet werden. Alternativ können auch die Lösemittel N-Ethylpyrrolidon, Dimethylsulfoxid, cyclische Ether (z.B. Tetrahydrofuran, 2-Methyltetrahydrofuran), Ketone (z.B. Aceton, Butanon) und/oder Lactone (z.B. γ-Butyrolacton) eingesetzt werden. Weitere Beispiele für geeignete Bindermaterialien sind unter anderem: Carboxymethylcellulose (CMC), Alginsäure, Polyacrylate, Teflon und Polyisobutylen (z.B. Oppanol von Firma BASF). Bei der Verwendung von Polyisobutylenbindern werden bevorzugt Kohlenwasserstoffe (Aromaten, z.B. Toluol oder gesättigte Kohlenwasserstoffe, z.B. Hexan, Cyclohexan, Heptan, Octan) verwendet.

Das optional verwendete weitere pulverförmige lithiumeinlagerungsfähige Material ist bevorzugt ausgewählt aus den Gruppen Graphite, Graphen, schichtstrukturierte Lithium-Übergangsmetallnitride (z.B. Li_{2,6}Co_{0,4}N, LiMoN₂, Li₇MnN₄, Li_{2,7}Fe_{0,3}N), mit Lithium legierungsfähige Metallpulver (z.B. Sn, Si, Al, B, Mg, Ca, Zn oder Mischungen daraus), Hauptgruppenmetalloxide mit einem Metall, das in reduzierter Form (also als Metall mit der Oxidationsstufe Null) mit Lithium legiert (z.B. SnO₂, SiO₂, SiO, TiO₂), Metallhydride (z.B. MgH₂, LiH, TiNiHₓ, AlH₃, LiAlH₄, LiBH₄, Li₃AlH₆, LiNiH₄, TiH₂, LaNi_{4,25}Mn_{0,75}H₅, Mg₂NiH_{3,7}), Lithiumamid, Lithiumimid, Tetralithiumnitridhydrid, schwarzer Phosphor sowie Übergangsmetalloxide, die mit Lithium nach einem Konversionsmechanismus unter Aufnahme von Lithium reagieren können (z.B. Co₃O₄, CoO, FeO, Fe₂O₃, Mn₂O₃, Mn₃O₄, MnO, MoO₃, MoO₂, CuO, Cu₂O). Eine Übersicht zu vielen der verwendbaren Anodenmaterialien kann dem Übersichtsbeitrag von X. Zhang et al., Energy & Environ. Sci. 2011, 4, 2682, entnommen werden. Die erfindungsgemäß hergestellte Anodendispersion enthaltend ein auf nicht-elektrochemischem Wege hergestelltes stabilisiertes (teil)lithiiertes Synthesegraphitpulver wird auf eine Stromableiterfolie bestehend aus bevorzugt einem dünnen Kupfer- oder Nickelblech aufgebracht, getrocknet und bevorzugt kalandriert. Die solchermaßen hergestellte Anodenfolie läßt sich durch Kombination mit einem lithiumleitfähigen Elektrolyt-Separatorsystem und einer geeigneten Kathodenfolie enthaltend eine Lithiumverbindung mit einem Potential von > 2 V *vs* Li/Li⁺ (z.B. Lithiummetalloxide wie LiCoO₂, LiMn₂O₄, LiNi_{0,5}Mn_{1,5}O₂ oder Sulfide wie Li₂S, FeS₂) zu einer Lithiumbatterie mit gegenüber dem Stand der Technik erhöhter Kapazität kombinieren. Die technische Herstellung solcher galvanischer Zellen (jedoch ohne Verwendung der erfindungsgemäßen gecoateten (teil)lithiierten Graphitpulver) ist hinreichend bekannt und beschrieben, z.B. P. Kurzweil, K. Brandt, Secondary Batteries, Lithium Rechargeable Systems: Overview, in: Encyclopedia of Electrochemical Power Sources, ed. J. Garche, Elsevier, Amsterdam 2009, Vol. 5, p. 1-26.

### Beispiele

### Beispiel 1: Herstellung von ungecoatetem LiCₓ (x = ca. 6) aus Synthesegraphit SLP 30 und ungecoatetem Lithium in einer Planetenkugelmühle

Unter Schutzgasatmosphäre (Argon-gefüllte Handschuhbox) wurden in einen 50 mL-Mahlbecher aus Zirkonoxid 5,00 g Synthesegraphitpulver SLP30 von Firma Timcal sowie 0,529 g ungecoatetes Lithiumpulver mit einer mittleren Partikelgröße von D₅₀ = 123 µm (Meßmethode: Laserreflexion, Gerät Lasentec FBRM von Firma Mettler Toledo) eingefüllt und mit einem Spatel vermischt. Dann wurden ca. 27 g Zirkonoxid-Mahlkugeln (Kugeldurchmesser 3 mm) eingefüllt. Die Mischung wurde in einer Planetenkugelmühle (Pulverisette 7 premium line von Firma Fritsch) 15 Minuten mit einer Umdrehungsfrequenz von 800 upm gemahlen. Das vermahlene Produkt wurde in der Handschuhbox gesiebt und es wurden 4,6 g eines schwarzen, goldschimmernden und fließfähigen Pulvers erhalten.

Per Röntgendiffraktometrie kann gezeigt werden, dass sich ein einheitliches Produkt mit einer Stöchiometrie von C : interkaliertem Li von ca. 12 : 1 gebildet hat. Metallisches Lithium ist nicht mehr nachzuweisen.

### Vergleichsbeispiel 1: Stabilität des ungecoateten lithiierten Synthesegraphits aus Beispiel 1 im Kontakt mit NMP sowie EC/EMC

Die Untersuchung der thermischen Stabilität wurde mit Hilfe einer Apparatur der Firma Systag, Schweiz, dem Radex-System, vorgenommen. Dazu werden die zu untersuchenden Substanzen oder Substanzmischungen in Stahlautoklaven mit einem Fassungsvermögen von ca. 3 ml eingewogen und erhitzt. Aus Temperaturmessungen des Ofens und Gefäßes lassen sich thermodynamische Daten ableiten.

Im vorliegenden Fall wurden 0,1 g Li/C-Mischung bzw. -Verbindung mit 2 g EC/EMC unter Inertgasbedingungen eingewogen und auf eine Ofenendtemperatur von 250°C erhitzt. Man erkennt beim Überschreiten von ca. 180°C ein exothermes Zersetzungsereignis.

Bei der Vermischung der Li/C-Verbindung aus Beispiel 1 mit NMP wird eine spontane, jedoch schwache Reaktion (ohne run-away-Erscheinungen) bemerkt. Im anschließenden Radex-Experiment wird bis zu einer Endtemperatur von 250°C kein signifikanter exothermer Effekt bemerkt. Die thermolysierte Mischung ist nach wie vor flüssig.

### Beispiel 2: Coating von lithiiertem Synthesegraphitpulvers der Stöchiometrie LiC₆ mittels einer LiBOB-Lösung in EC/EMC

4,5 g eines nach Beispiel 1 hergestellten lithiierten Synthesegraphitpulvers wurden unter Argon-Atmosphäre in einem Glaskolben mit 10 ml einer 1%igen LiBOB-Lösung (LiBOB = Lithiumbis(oxalato)borat) in wasserfreiem EC/EMC (1:1 wt/wt) gemischt und 2 Stunden bei Raumtemperatur gerührt. Dann wurde die Dispersion unter Luftausschluß filtriert, dreimal mit Dimethylcarbonat und je einmal mit Diethylether und Hexan gewaschen. Nach 3-stündiger Vakuumtrocknung bei Raumtemperatur wurden 4,3 g eines goldschimmernden dunklen Pulvers erhalten.

### Beispiel 3: Stabilität des erfindungsgemäßen gecoateten Produktes aus Beispiel 2 in EC/EMC und NMP im Vergleich mit dem ungecoateten Vorprodukt

Das gecoatete Material aus Beispiel 3 sowie eine Probe der verwendeten unbehandelten lithiierten Graphitpulvercharge (Herstellung nach Vorschrift von Beispiel 1) wurden in der Radex-Apparatur auf thermische Stabilität in Gegenwart einer EC/EMC-Mischung untersucht.

Man erkennt deutlich, dass sich das ungecoatete Material bereits ab ca. 130°C zu zersetzen beginnt, während das gecoatete Pulver erst oberhalb ca. 170°C exotherm reagiert.

Bei der Vermischung mit NMP wird bei Zimmertemperatur keinerlei Reaktion bemerkt. Im Radex-Experiment werden sehr schwache Exotherma erst bei > 90°C registriert.

Die Mischung bleibt flüssig.

### Beispiel 4: Luftstabilität des erfindungsgemäßen gecoateten Produktes aus Beispiel 2 im Vergleich mit dem ungecoateten Vorprodukt

Materialproben von jeweils ca. 1 g des gecoateten lithiierten Graphitpulvers aus Beispiel 3 sowie des nicht nachbehandelten Ilithiierten Graphitpulvers wurden in ein Wägeglas abgefüllt und an Luft bei ca. 23°C und einer relativen Luftfeuchtigkeit von 37 % ausgelagert. Von Zeit zu Zeit wurde der Gewichtszuwachs notiert. Während das gecoatete Pulver für über 30 Minuten seine goldschimmernde Farbe behielt, verfärbte sich das ungecoatete Material fast sofort (in < 60 s) schwarz.

Im Auslagerungsexperiment an Luft (23°C, 37% rel. Feuchte) erkennt man, dass das ungecoatete lithiierte Pulver bereits in den ersten 5 Minuten über 5 Gew.-% an Gewicht zunimmt. Es bilden sich durch Reaktion mit Sauerstoff, Luftfeuchte, Kohlendioxid und Stickstoff die entsprechenden Lithiumsalze. Dagegen ist das gecoatete Pulver wesentlich stabiler. Über längere Lagerdauer reagiert das enthaltene Lithium aber in ähnlicher Weise ab.

## Patentansprüche

1. Verfahren zur Herstellung von gecoatetem lithiiertem Graphitpulver, **dadurch gekennzeichnet, dass** die Lithiierung des pulverförmigen Graphits unter Lithiuminterkalation durch ein nicht-elektrochemisches Verfahren ausgehend von metallischem Lithium erfolgt, wobei in einem ersten Prozeßschritt ein pulverförmiger Graphit mit Lithiummetallpulver vermischt und durch Rühren, Vermahlen und/oder Verpressen zur Bildung von Li-Graphit-Interkalaten zur Reaktion gebracht wird und je nach gewünschter Endstöchiometrie die beiden genannten Rohstoffe im Molverhältnis Li : C von 1 : minimal 3 bis 1 : maximal 600 eingesetzt werden sowie eine stabilisierende Coatingschicht außerhalb einer elektrochemischen Zelle durch ein nicht-elektrochemisches Verfahren aufgebracht wird, bei dem das Coatingmittel ausgewählt ist aus: N₂, CO₂, CO, O₂, N₂O, NO, NO₂, HF, F₂, PF₃, PF₅, POF₃, Kohlensäureestern, Lithiumchelatoboratlösungen, schwefelorganischen Verbindungen, stickstoffhaltigen organischen Verbindungen, Phosphorsäure oder organischen phosphorhaltigen Verbindungen, fluorhaltigen organischen und anorganischen Verbindungen und/oder siliciumhaltigen Verbindungen.

2. Verfahren nach Anspruch 1, **dadurch gekennzeichnet, dass** das Molverhältnis der beiden Atomsorten Li : C zwischen 1 : mindestens 5 und 1 : maximal 600 beträgt.

3. Verfahren nach Anspruch 1 oder 2, **dadurch gekennzeichnet, dass** als Coatingmittel Lithiumchelatoboratlösungen in aprotischen organischen Lösungsmitteln verwendet werden, wobei das Lithiumchelatoborat bervorzugt ausgewählt ist aus: Lithium bis(oxalato)borat; Lithium bis(salicylato)borat, Lithium bis(malonato)borat, Lithium difluorooxalatoborat und das aprotische organische Lösungsmittel bevorzugt ausgewählt ist aus: sauerstoffhaltigen Heterocyclen, Nitrilen, Carbonsäureestern oder Ketonen.

4. Verfahren nach Anspruch 1 bis 3, **dadurch gekennzeichnet, dass** das Coating im Temperaturbereich zwischen 0 und 150°C vorgenommen wird.

5. Verwendung von gecoatetem, fließfähigen lithiiertem Graphitpulver erhalten gemäß Anspruch 1 bis 4 als Bestandteil/Aktivmaterial von Lithiumbatterieelektroden.

6. Verwendung nach Anspruch 5, **dadurch gekennzeichnet, dass** sie in einer galvanischen Zelle enthaltend eine Kathode, ein lithiumleitfähiges Elektrolyt-Separatorsystem und eine graphithaltige Anode erfolgt, wobei der Anode bei der Zellfertigung (d.h. vor dem ersten Ladezyklus) ein auf nicht-elektrochemischem Wege gecoatetes, fließfähiges lithiiertes Graphitpulver zugesetzt wird.

7. Verwendung nach Anspruch 5 oder 6, **dadurch gekennzeichnet, dass** das Molverhältnis zwischen Graphit (C) und elektrochemisch aktivem Lithium (Li) in der Anode mindestens 3 : 1 und maximal 600 : 1 beträgt.

8. Verfahren zur Herstellung von Lithiumbatterieanodenaus einem nichtelektrochemischen Verfahren lithiierter pulverförmiger und gecoateter Graphit erhalten gemäß Anspruch 1 bis 4, **dadurch gekennzeichnet, dass** er unter Inert- oder Trockenraumbedingungen mit mindestens einem Bindermaterial und optional einem oder mehreren weiteren pulverförmigen lithiumeinlagerungsfähigen Material(ien) mit einem elektrochemischen Potential ≤ 2 V *vs* Li/Li⁺ sowie ebenfalls optional mit einem leitfähigkeitsverbessernden Additiv sowie einem nichtwäßrigen organischen Lösungsmittel gemischt sowie homogenisiert wird und diese Dispersion durch ein Beschichtungsverfahren auf eine Stromableiterfolie aufgebracht und getrocknet wird.

9. Verfahren nach Anspruch 8, **dadurch gekennzeichnet, dass** das weitere pulverförmige lithiumeinlagerungsfähige Material ausgewählt ist aus folgenden Materialgruppen: Graphite, Graphene, schichtstrukturierte Lithium-Übergangsmetallnitride, mit Lithium legierungsfähige Metallpulver, Hauptgruppenmetalloxide mit einem Metall, das in reduzierter Form (also als Metall) mit Lithium legiert, Metallhydride, Lithiumamid, Lithiumimid, Tetralithiumnitridhydrid, schwarzen Phosphor oder Übergangsmetalloxide, die mit Lithium nach einem Konversionsmechanismus unter Aufnahme von Lithium reagieren können.

10. Verfahren nach Anspruch 8 oder 9, **dadurch gekennzeichnet, dass** das nichtwäßrige organische Lösemittel bevorzugt ausgewählt ist aus Kohlenwasserstoffen, N-Methylpyrrolidon, N-Ethylpyrrolidon, Dimethylsulfoxid, Ketonen, Lactonen und/oder cyclischen Ethern.

11. Verfahren nach Anspruch 8 bis 10, **dadurch gekennzeichnet, dass** der Binder bevorzugt ausgewählt ist aus Polyvinylidendifluorid, Teflon, Polyacrylaten und Polyisobutenen.

## Claims

1. A method for preparing coated lithiated graphite powder, **characterized in that** the lithiation of the powdered graphite occurs with lithium intercalation by a non-electrochemical process starting from metallic lithium, wherein, in a first process step, a powdered graphite is mixed with lithium metal powder and reacted by stirring, grinding and/or pressing to form Li graphite intercalates, and, depending on the desired final stoichiometry, the two mentioned raw materials are used at the molar ratio Li:C of 1: minimum 3 to 1: maximum 600, and a stabilizing coating layer is applied outside of an electrochemical cell by a non-electrochemical process, in which the coating agent is selected from: N₂, CO₂, CO, O₂, N₂O, NO, NO₂, HF, F₂, PF₃, PF₅, POF₃, carbonic acid esters, lithium chelatoborate solutions, sulfur organic compounds, nitrogen-containing organic compounds, phosphoric acid or organic phosphorus-containing compounds, fluorine-containing organic and inorganic compounds and/or silicon-containing compounds.

2. The method according to Claim 1, **characterized in that** the molar ratio of the two atom types Li:C is between 1: at least 5 and 1: at most 600.

3. The method according to Claim 1 or 2, **characterized in that**, as coating agent, lithium chelatoborate solutions in aprotic organic solvents are used, wherein the lithium chelatoborate is preferably selected from: lithium bis(oxalato)borate; lithium bis(salicylato)borate, lithium bis(malonato)borate, lithium difluorooxalatoborate, and the aprotic organic solvent is preferably selected from: nitrogen-containing heterocycles, nitriles, carbonic acid esters or ketones.

4. The method according to Claims 1 to 3, **characterized in that** the coating is carried out in the temperature range between 0 and 150 °C.

5. A use of coated, flowable lithiated graphite powder obtained according to Claim 1 to 4, as component/active material of lithium battery electrodes.

6. The use according to Claim 5, **characterized in that** it occurs in a galvanic cell containing a cathode, a lithium-conductive electrolyte separator system and a graphite-containing anode, wherein, during the cell preparation (i.e., before the first charging cycle), coated, flowable lithiated graphite powder is added to the anode by a non-electrochemical route.

7. The use according to Claim 5 or 6, **characterized in that** the molar ratio between graphite (C) and electrochemically active lithium (Li) in the anode is at least 3:1 and at most 600:1.

8. The method for preparing lithium battery anodes from a non-electrochemical method lithiated powdered and coated graphite obtained according to Claims 1 to 4, **characterized in that** it is mixed under inert or dry-room conditions with at least one binder material and optionally one or more additional powdered lithium-intercalation-capable material(s) with an electrochemical potential ≤ 2 V *vs* Li/Li⁺ as well as also optionally with a conductivity-improving additive as well as a non-aqueous organic solvent and homogenized, and this dispersion is applied by a coating method to a current dissipation film and dried.

9. The method according to Claim 8, **characterized in that** the additional powdered lithium-intercalation-capable material is selected from the following material groups: graphites, graphenes, layer-structured lithium transition metal nitrides, metal powders capable of forming alloys with lithium, main group metal oxides with a metal which in reduced form (that is to say as a metal) form alloys with lithium, metal hydrides, lithium amide, lithium imide, tetralithium nitride hydride, black phosphorus or transition metal oxides which can react with lithium according to a conversion mechanism with the uptake of lithium.

10. The method according to Claim 8 or 9, **characterized in that** the non-aqueous organic solvent is preferably selected from hydrocarbons, N-methylpyrrolidone, N-ethylpyrrolidone, dimethyl sulfoxide, ketones, lactones and/or cyclic ethers.

11. The method according to Claims 8 to 10, **characterized in that** the binder is preferably selected from polyvinylidene difluoride, Teflon, polyacrylates and polyisobutenes.

## Revendications

1. Procédé de production de poudre de graphite lithiée enrobée, **caractérisé en ce que** la lithiation du graphite pulvérulent a lieu par intercalage de lithium par un procédé non électrochimique à partir de lithium métallique, dans lequel dans une première étape de processus, un graphite pulvérulent est mélangé avec de la poudre de métal de lithium et amené à réagir par agitation, broyage et/ou compression pour la formation d'intercalaires Li-graphite et en fonction de l'endostœchiométrie souhaitée, les deux dites matières premières sont utilisées selon le rapport molaire Li : C de 1 : minimum 3 à 1 : maximum 600 ainsi qu'une couche d'enrobage stabilisante est appliquée à l'extérieur d'un élément électrochimique par un procédé non électrochimique, dans lequel le moyen d'enrobage est sélectionné parmi : N₂, CO₂, CO, O₂, N₂O, NO, NO₂, HF, F₂, PF₃, PF₅, POF₃, esters d'acide carbonique, solutions de chélatoborate de lithium, composés organosulfurés, composés organiques contenant de l'azote, acide phosphorique ou composés organiques contenant du phosphore, composés organiques et anorganiques contenant du fluor et/ou composés contenant du silicium.

2. Procédé selon la revendication 1, **caractérisé en ce que** le rapport molaire des deux types d'atomes Li : C est entre 1 : au moins 5 et 1 : maximum 600.

3. Procédé selon la revendication 1 ou 2, **caractérisé en ce que** des solutions de chélatoborate de lithium sont utilisées en tant que moyen d'enrobage dans des solvants organiques aprotiques, dans lequel le chélatoborate de lithium est sélectionné de préférence parmi : bis(oxalato)borate de lithium ; bis(salicylato)borate de lithium, bis(malonato)borate de lithium, difluorooxalatoborate de lithium et le solvant organique aprotique est sélectionné de préférence parmi : hétérocycles contenant de l'oxygène, nitriles, esters d'acide carbonique ou cétones.

4. Procédé selon la revendication 1 à 3, **caractérisé en ce que** l'enrobage est réalisé dans la plage de températures entre 0 et 150 °C.

5. Utilisation de poudre de graphite lithiée fluide enrobée obtenue selon la revendication 1 à 4 en tant que composant/matériau actif d'électrodes de batterie au lithium.

6. Utilisation selon la revendication 5, **caractérisée en ce qu'**elle a lieu dans un élément galvanique contenant une cathode, un système séparateur d'électrolyte conducteur de lithium et une anode contenant du graphite, dans laquelle une poudre de graphite lithiée fluide enrobée par voie non électrochimique est ajoutée à l'anode lors de la fabrication d'élément (autrement dit avant le premier cycle de charge).

7. Utilisation selon la revendication 5 ou 6, **caractérisée en ce que** le rapport molaire entre graphite (C) et lithium électrochimiquement actif (Li) dans l'anode est d'au moins 3 : 1 et maximum 600 : 1.

8. Procédé de production d'anodes de batterie au lithium graphite enrobé et pulvérulent lithié à partir d'un procédé non électrochimique obtenu selon la revendication 1 à 4, **caractérisé en ce qu'**il est mélangé dans des conditions inertes ou de chambre sèche avec au moins un liant et en option un ou plusieurs autre(s) matériau(x) pulvérulent(s) apte(s) au stockage de lithium avec un potentiel électrochimique ≤ 2 V vs Li/Li⁺ ainsi qu'également en option avec un additif améliorant la conductibilité ainsi qu'un solvant organique non aqueux et homogénéisé et cette dispersion est appliquée par un procédé de revêtement sur un film collecteur de courant et séchée.

9. Procédé selon la revendication 8, **caractérisé en ce que** l'autre matériau pulvérulent apte au stockage de lithium est sélectionné parmi les groupes de matériau suivants : graphites, graphènes, nitrures de métaux de transition de lithium structurés en couche, poudres de métal pouvant être alliées au lithium, oxydes métalliques de groupe principal avec un métal, qui s'allie sous forme réduite (donc en tant que métal) au lithium, hybrides métalliques, amidure de lithium, imide de lithium, hybride de nitrure de tétralithium, phosphore noir ou oxydes métalliques de transition, qui peuvent réagir avec le lithium après un mécanisme de conversion avec absorption de lithium.

10. Procédé selon la revendication 8 ou 9, **caractérisé en ce que** le solvant organique non aqueux est sélectionné de préférence parmi hydrocarbures, N-méthylpyrrolidone, N-éthylpyrrolidone, diméthylsulfoxyde, cétones, lactones et/ou éthers cycliques.

11. Procédé selon la revendication 8 à 10, **caractérisé en ce que** le liant est sélectionné de préférence parmi difluorure de polyvinylidène, téflon, polyacrylates et polyisobutènes.
